# EUROPEAN PATENT APPLICATION

(11) **EP 2 687 117 A2**
(43) Date of publication of application: **22.01.2014**
(21) Application number: 13173751.2
(22) Date of filing: 26.06.2013
(51) Int. Cl.: A44C 7/00

(54) **Fastener for ornament with pin and manufacturing method thereof**

(30) Priority: 20.07.2012 JP 2012161066
(71) Applicant: Kikunaga, Eri, Tokyo 164-0001 (JP)
(72) Inventor: Kikunaga, Eri, Tokyo 164-0001 (JP)
(74) Representative: Carpmael, Robert Maurice Charles

(57) **Abstract**

The present invention is to provide a fastener (1) for an ornament having a pin (P) which is excellent in workability on assembly and manufacture and improved in yield ratio and also to provide a manufacturing method thereof. The fastener (1) is arranged so that the pin (P) of the ornament is clamped in the fastener (1) and retained between the respective spherical surfaces of a plurality of small balls (31). A column portion (4) inside a housing (2) is provided with an outer column portion (41) of a cylindrical body which is formed integrally with a pin retaining portion (3) and internally has a through hole (42) in the same direction as a direction in which the pin is inserted and an inner column portion (43) of a cylindrical body which is inserted and fixed to the through hole (42) inside the outer column portion (41). The inner column portion (43) is formed integrally with a control lever (5) and also has a through hole (44) acting as a passage for introducing the pin (P) inserted through a pin passing hole (20).

## Description

### (a) Background of the invention

### 1. Technical Field

The present invention relates to a fastener for an ornament having a pin and a manufacturing method thereof and, more particularly, provides an art related to a fastener for an ornament having a pin which detachably retains the pin included in the ornament and the method thereof.

### 2. Description of the prior art

### [Background Art]

Examples of an ornament formed so that a pin included in the ornament can be retained detachably via a separately prepared fastener include pierced earrings, tiepins, buttons, etc., and as the fastener used in this case, those of various structures have been proposed from before.

The fastener used here can largely be classified in terms of a basic structure into a type with which the pin is retained by an elastic body and a type with which the pin is retained by a plurality of small balls incorporated in the fastener.

In regard to fasteners of the type with which the pin is retained by an elastic body, Patent Document 1 mentioned below discloses a pierced earring catch, with which the ornament with a pin is a pierced earring and the catch is formed of a silicone resin material to flexibly accommodate pins that differ in diameter dimension.

Meanwhile, as fasteners of the type with which the pin is clamped and retained by a plurality of incorporated small balls, those of various structures are already present in the following patent documents.

That is, Patent Document 2 mentioned below discloses a washer (fastener) for a badge including a steel ball bearing having a frustoconical shape and freely movably retaining three small steel balls (small balls) that are freely supported in annular form, and a tapered-tube-shaped steel balls guide that supports the steel ball bearing in a pressingly urged state so that the small steel balls are in pressure contact constantly, and where release of the pin is enabled by moving the steel ball bearing against the pressingly urging force.

Patent Document 3 mentioned below discloses a tiepin (fastener) including a chuck body holding freely three small balls attached in annular form in a frustoconical portion, and a metal fastening member having a tapered surface at an inner side surface that faces the respective small balls and supporting the chuck body in a constantly pressingly urged state, and where release of a pin is enabled by releasing engagement of the respective small balls and the pin by pressing an operating member against a conical surface of the chuck body against the pressingly urging force.

Patent Document 4 mentioned below discloses a personal accessory retainer including a freely movable body having a truncated conical fitting groove in a tip internal portion, an engaging member having small balls in a flange portion provided in a head portion and disposed inside the fitting groove, a latching base fixed to a terminal end portion of the engaging member, and a coil spring interposed between the latching base and the flange portion, and where a pin inserted in an engaging hole of the engaging member and clamped by the small balls is enabled to be released by pulling up the freely movable body against its pressingly urging force. Here, an aperture diameter of an engaging hole side opening in communication with the engaging hole is made smaller than a diameter of each small ball to prevent the respective small balls protruding toward the engaging hole side from dropping into the engaging hole.

Patent Document 5 mentioned below discloses a rotation and fall-off prevention device (fastener) for a personal accessory formed so as to include a pin member having a plurality of pins to enable prevention of rotation, and a pin engaging body having holes for pins at positions facing the respective pins, and where the pins that are inserted in the respective holes for pins and engaged with small balls in a positional relationship with a tapered surface are enabled to be released by releasing the engagement by pulling down an operating grip portion against a pressingly urging force.

Patent Document 6 mentioned below discloses a button with fastening function including a pin coupled to a button side, and a pin fastener in which a tip portion of the pin is disengageably fitted, and where the pin that is engaged with small balls in a positional relationship with a tapered surface can be released by disengaging the engagement by pressing a release lever against a pressingly urging force.

Patent Document 7 mentioned below discloses a pierced earring catch and a pierced earring including the pierced earring catch, the pierced earring catch including three small balls formed of rigid bodies, and a ball holder elastically deformably retaining the respective small balls that are disposed in annular form, and where a pin is enabled to be integrated with the pierced earring catch by being press-fitted into a pin insertion hole positioned at a center of the ball holder.

Patent Document 8 mentioned below discloses a fastener and a personal ornament including the fastener, the fastener including a pinching member arranged from three metal small balls disposed in annular form, a holder arranged from a rubber-like elastic member, and a ring tightening the pinching member and the holder, and where a pin is enabled to be integrated to the fastener by being press-fitted into a through-hole positioned at a central position of the three metal small balls.

Meanwhile, Patent Document 9 mentioned below discloses a fastener for pierced earring or other personal accessory proposed by the present applicant. The fastener includes a guide cylinder having a taper formed on an inner peripheral surface, a plurality of small balls disposed inside the guide cylinder, and a pressing member including a flange portion, with a lower surface that contacts the respective small balls, and being pressingly urged, and the respective small balls that clamp a pin are formed to enable release of the clamping state by pulling up a knob, including in the pressing member, against the pressingly urging force.

With all of the arts disclosed in Patent Documents 2 to 9 mentioned above, a pin is clamped by a clamping force generated at a small ball side under a pressingly urging force, and release of the pin is performed by weakening the clamping force by moving the small balls in a freely moving direction against the pressingly urging force by use of a manual operation.

However, with these prior arts, when, for example, the ornaments are pierced earrings, despite there being pins with pin diameters from 0.6 mm to 1.2 mm and thus differing by a factor of approximately 2, this is not accommodated adequately, and depending on the pressing force generated by the respective small balls, not only may it not be possible to exhibit reliable clamping forces in accordance with the types of pins that differ in diameter but it may also not be necessarily possible to perform an insertion operation and a release operation smoothly.

Thus, in view of the above issue of the prior arts, the present applicant has additionally proposed an art described in Patent Document 10 on the basis of findings that a taper angle of a tapered surface that contacts respective small balls and applies pressingly urging forces directed toward a central axis and a coil spring that applies a pressingly urging force to a movable operating body have large influences on smooth insertion and release of a pin.

### [Prior Art Documents]

### [List of Patent Documents]

[Patent Document 1] Japan Patent Pre-Publication No. 2006-26143
[Patent Document 2] Japan UM Pre-Publication No. Sho 39-11877
[Patent Document 3] Japan UM Pre-Publication No. Sho 39-33805
[Patent Document 4] Japan UM Pre-Publication No. Sho 58-107010
[Patent Document 5] Japan Patent Pre-Publication No. Hei 3-261403
[Patent Document 6] Japan UM Registration No. 3070576
[Patent Document 7] Japan Patent Pre-Publication No. 2000-50918
[Patent Document 8] Japan Patent Pre-Publication No. 2005-204752
[Patent Document 9] Japan Patent No. 4167703
[Patent Document 10] Japan Patent No. 4560588
   (U.S. Patent No.8,424,174)

### (b) Summary of the Invention

### [Problem to be Solved by the Invention]

The present applicant continuously studied the art of Patent Document 10 and found that sufficient effects were obtained in detachably attaching a pin reliably and freely but also found room for improvement in workability on assembly and manufacture and yield ratio.

An object of the present invention is to provide a fastener for an ornament having a pin which is capable of detachably attaching the pin included in the ornament reliably and freely, excellent in workability on assembly and manufacture and improved in yield ratio and also to provide a manufacturing method thereof.

### [Means for Solving the Problem]

The present invention has been made to attain the above object and provides the following arrangements.

1. A fastener for an ornament having a pin which includes a housing that has a pin passing hole for insertion of the pin included in the ornament and an opening portion that is provided at a position directly opposite to the pin passing hole,
   a pin retaining portion which is disposed inside the housing to clamp and retain a pin inserted through the pin passing hole between the respective spherical surfaces of a plurality of small balls,
   a control lever which is installed consecutively at the pin retaining portion via a column portion outside the opening portion and releases the pin which has been clamped and retained outside the housing by pulling backward the pin retaining portion from the pin passing hole, and
   a coil spring which is disposed on an outer periphery of the column portion inside the housing and urges the pin retaining portion and the control lever in a direction of the pin passing hole, and
   the fastener for an ornament having a pin which is arranged so that
   the pin is clamped and retained by the small balls of the pin retaining portion in such a manner that the pin retaining portion is urged to the pin passing hole side, by which each of the small balls is pushed in a pin direction and a part of the spherical surface of each of the small balls on the pin side is brought into contact with the pin in a pressed state, and
   a motion of releasing the pin which has been clamped and retained by the pin retaining portion is performed by pulling backward the pin retaining portion from the pin passing hole to release a pressing force to the pin by each of the small balls, wherein
   the column portion is provided with an outer column portion of a cylindrical body which is formed integrally with the pin retaining portion in a direction at which the pin retaining portion is pulled backward and also has internally a through hole in the same direction as a direction at which the pin is inserted and
   an inner column portion of a cylindrical body which is inserted and fixed on the through hole inside the outer column portion, formed integrally with the control lever in a direction at which the control lever is urged and has a through hole acting as a passage for introducing the pin inserted through the pin passing hole.

2. The fastener for an ornament having a pin according to the above arrangement 1, wherein the housing includes an upper housing member which constitutes the pin passing hole side and a lower housing member which constitutes the opening portion side.

3. The fastener for an ornament having a pin according to the above arrangement 1 or 2, wherein the inner column portion is inserted and fixed to the outer column portion by applying pressure.

4. The fastener for an ornament having a pin according to the above arrangements of any one of 1 to 3, wherein all the outer peripheral surfaces of the outer column portion are in a state of being inside the housing when the pin is not inserted.

5. The fastener for an ornament having a pin according to the above arrangement of any one of 1 to 4, wherein substantially all the outer peripheral surfaces of the outer column portion are in a state of being inside the housing when the pin is clamped and retained.

6. The fastener for an ornament having a pin according to the above arrangement of any one of 1 to 5, wherein a guide portion having a tapered surface in which an open end of the pin passing hole side is a small diameter portion and an open end of the opening portion side is a large diameter portion is disposed between an outer peripheral surface of the pin retaining portion and an inner peripheral surface of the housing opposite to the outer peripheral surface thereof.

7. The fastener for an ornament having a pin according to the above arrangement 6, wherein an angle of the tapered surface is in a range of 10 degrees to 40 degrees with respect to an axial direction of the pin which is inserted.

8. A method for manufacturing the fastener for an ornament having a pin according to the above arrangement 2, and
the method for manufacturing the fastener for an ornament having a pin, wherein
an upper housing member which is one constitution member of a housing has a pin passing hole into which a pin and included in the ornament is first placed at a position of assembly and manufacture, with the pin passing hole kept below,
a pin retaining portion which clamps and retains the pin inserted through the pin passing hole is assembled and placed inside the upper housing member in a state that a plurality of small balls are embraced inside the pin retaining portion,
a coil spring is disposed in a state of being wound around on an outer periphery of an outer column portion which is installed consecutively at the pin retaining portion and formed integrally in a direction at which the pin retaining portion is pulled backward,
the lower housing member which is the other constitution member of the housing is assembled into the upper housing member of the housing in which a guide portion, a pin retaining portion, an outer column portion and a coil spring are assembled so as to cover the outer column portion and the coil spring from above in a state that an opening portion formed on the lower housing member is kept above,
the housing is formed integrally by connecting the upper housing member to the lower housing member and fixing them, and
the inner column portion is inserted and fixed into a through hole of the outer column portion which is visible inside the opening portion from the opening portion of the lower housing member of the housing, by which a control lever which is formed integrally at the inner column portion and also releases the pin which has been clamped and retained is installed consecutively at the pin retaining portion outside the opening portion via the outer column portion and the inner column portion to complete the fastener.

9. The method for manufacturing the fastener for an ornament having a pin according to the above arrangement 8, wherein
before the pin retaining portion is assembled and placed inside the upper housing member, a guide portion having a tapered surface in which an open end of the pin passing hole side is a small diameter portion and an open end opposite to the small diameter portion is a large diameter portion is assembled and placed inside the upper housing member, with the small diameter portion kept below, and
after the guide portion is assembled and placed, in a state that a plurality of small balls are embraced inside the pin retaining portion, the pin retaining portion is assembled and placed, while being inside the upper housing member and in contact with an inner peripheral surface of the tapered surface of the guide portion.

### [Effect of the Invention]

According to the above arrangements 1 and 8, it is possible to provide a fastener for an ornament having a pin which is capable of attaching detachably the pin included in the ornament and also reliably retaining the pin and which is excellent in workability on assembly and manufacture and also improved in yield ratio and also to provide a method for manufacturing thereof.

In particular, on assembling the column portion constituted with the outer column portion and the inner column portion, the inner column portion formed integrally with the control lever is inserted and attached to the through hole of the outer column portion having a coil spring disposed on the outer periphery. According to the above constitution, the inner column portion can be inserted and attached only by being inserted and fixed into the through hole of the outer column portion visible inside the opening portion of the lower housing member of the housing from outside the housing. Thus, occurrence of defective assembly is quite low and workability is extremely good.

Thus, problems found in the prior art of Patent Document 10 have been improved by such a constitution that the outer column portion formed integrally with the control lever is inserted and attached to the inner column portion in which the coil springs are disposed, with an interval kept on the outer periphery, from outside the housing, so as to be inserted into a clearance between the outer periphery of the inner column portion and the inner periphery of the coil spring. The above insertion and attachment work would otherwise require care and would not be necessarily high in workability. In particular, since individual constitution components are dimensionally small, workers are required to be familiar with the insertion between the coil springs and the inner column portion. There is a case that if a rear end of the coil spring is pressed under pressure, the coil spring may be repulsed by a reactive force to eject the outer column portion and the control lever, thus resulting in loss of them, or there is a case that a leading end of the outer column portion pinches a winding portion of an upper end of the coil spring, which may result in occurrence of defective products to lower a yield ratio. However, the above constitution is able to improve these problems.

According to the above arrangement 2, after the small balls, the pin retaining portion, the outer column portion and the coil springs which are components to be assembled inside the housing are assembled in the upper housing member on assembly and manufacture, the lower housing member is covered thereon. The above constitution makes it easy to assemble these individual components inside the housing.

According to the above arrangement 3, it is possible to quite easily form the outer column portion which constitutes a column portion integrally with the inner column portion. It is also possible to avoid adherence of individual components involved in motion by leakage of an adhesive agent, etc., when an adhesive agent is used for fixing and, therefore, to prevent occurrence of defective products.

According to the above arrangements 4 or 5, there is no chance that the outer column portion is exposed outside. Therefore, where components are subjected to plating, only the control lever (the integrally formed inner column portion) and the housing are plated, thus making it possible to reduce the number of components which need to be plated and eventually attain reduction in cost.

According to the above arrangements 6 or 9, it is possible to clamp and retain the pin and also to release the pin more smoothly and reliably.

According to the above arrangement 7, it is possible to clamp and retain the pin and also to release the pin more smoothly and reliably.

### (c) Brief Description of the Drawings

Fig. 1 is a sectional view which shows one example of a fastener described in the present invention.
Figs. 2 to 7 are sectional views which show steps of manufacturing the fastener described in the present invention.

### (d) Detailed Description of Preferred Embodiments

### [Best Mode for Carrying Out the Invention]

Then, attached drawings will be referred to describe the present invention on the basis of an embodiment.

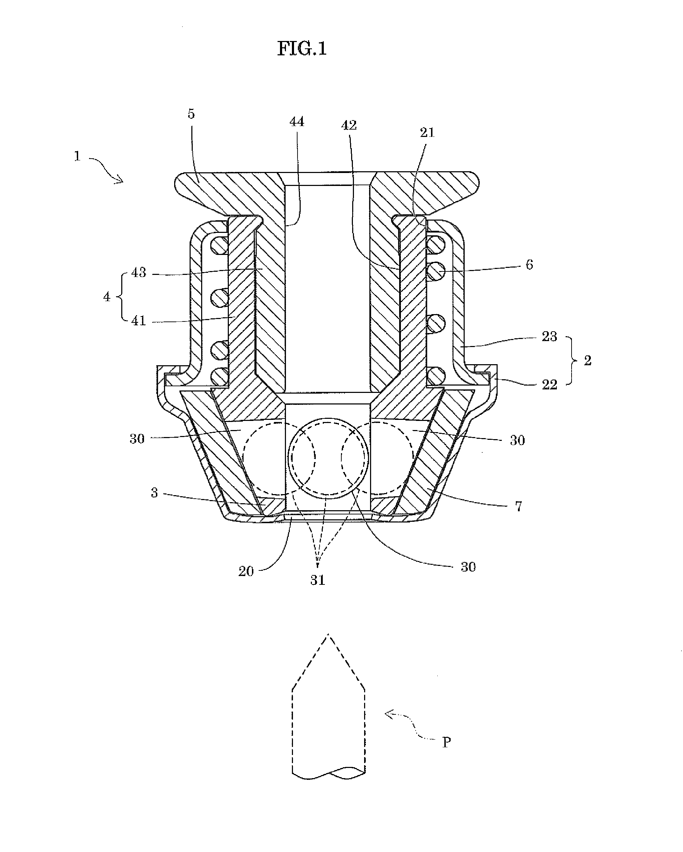

A fastener for an ornament having a pin described in the present invention (which may be, hereinafter, simply referred to as a fastener) is to retain the pin included in the ornament so as to be attached detachably. As shown in Fig.1, a fastener 1 is constituted specifically with a housing 2 which has a pin passing hole 20 through which a pin P included in the ornament (not illustrated) is inserted and an opening portion 21 formed at a position directly opposite to the pin passing hole 20, a pin retaining portion 3 which is disposed inside the housing 2 to clamp and retain the pin P inserted through the pin passing hole 20 between the respective spherical surfaces of a plurality of small balls 31, 31, 31 (three balls in the present embodiment), a control lever 5 which is installed consecutively at the pin retaining portion 3 via a column portion 4 outside the opening portion 21 to release the pin P which has been clamped and retained from outside the housing 2 by pulling backward the pin retaining portion 3 from the pin passing hole 20, and a coil spring 6 which is disposed on an outer periphery of the column portion 4 inside the housing 2 to urge the pin retaining portion 3 and the control lever 5 in a direction of the pin passing hole 20. That is, the pin P is clamped and retained by the small balls 31, 31, 31 of the pin retaining portion 3 in such a manner that the pin retaining portion 3 is urged to the pin passing hole 20 side, by which each of the small balls 31, 31, 31 is pushed in a direction of the pin P, and a part of the spherical surface of each of the small balls 31, 31, 31 on the pin P side is brought into contact with the pin P in a state of being pressed, and a motion of releasing the pin P which has been clamped and retained by the pin retaining portion 3 is performed in such a manner that the pin retaining portion 3 is pulled backward from the pin passing hole 20, thereby releasing a pressing force to the pin P by each of the small balls 31, 31, 31.

Further, in the fastener 1 of an embodiment of the present invention, the column portion 4 is provided with an outer column portion 41 of a cylindrical body which is formed integrally with the pin retaining portion 3 in a direction at which the pin retaining portion 3 is pulled backward and internally has a through hole 42 in the same direction as a direction at which the pin is inserted and an inner column portion 43 of a cylindrical body which is inserted and fixed to the through hole 42 inside the outer column portion 41 and formed integrally with the control lever 5 in a direction at which the control lever 5 is urged and has a through hole 44 acting as a passage for introducing the pin P which has been inserted through the pin passing hole 20.

Still further, as shown in the present embodiment, the housing 2 is preferably divided into two constitutions, that is, an upper housing member 22 which constitutes the pin passing hole 20 side and a lower housing member 23 which constitutes the opening portion 21 side. And, on assembly, the housing 2 is formed integrally by combining the respective opening end portions of the upper housing member 22 and the lower housing member 23 and jointing them by crimping. It is noted that the housing 2 constituted by the upper housing member 21 and the lower housing member 23 is not limited to the illustrated embodiment but may be different in position at which they are combined and jointed, and means for integrating them is not limited to crimping. The housing 2 is not limited to the illustrated constitution made up of two members and may be formed with one member. Where the housing 2 is formed with one member, one of the pin passing hole 20 and the opening portion 21 is opened widely and other constitution members (such as the small balls 31, the pin retaining portion 3, the column portion 4 and the coil springs 6) to be assembled inside the housing 2 are assembled from the pin passing hole 20 or the opening portion 21 which is opened widely and, thereafter, the thus widely-opened pin passing hole 20 or the opening portion 21 may be drawn so as to give a desired dimension.

The small balls 31, 31, 31 of the pin retaining portion 3 are respectively housed inside the small ball retaining holes 30 which are transparent holes drilled at the pin retaining portion 3. The small ball retaining holes 30 are made up of three transparent holes formed in a direction orthogonal to a direction at which the pin P is inserted and in three directions at an equal angle with respect to the axis of the pin P.

The inner column portion 43 may be inserted and fixed to the outer column portion 41 which constitutes the column portion 4 by any known means such as adhesive bonding, press-fitting and screwing. Among these means, press-fitting is preferable. According to the above constitution, the outer column portion 41 can be quite easily formed integrally with the inner column portion 43. It is also possible to avoid adhesion of individual components involved in motion by leakage of an adhesive agent, etc., as found in a case where adhesion means such as an adhesive agent is used and, therefore, to prevent occurrence of defective products.

Further, as shown in the present embodiment, the fastener 1 of the present invention is preferably provided with such a structure that a guide portion 7 having a tapered surface 71 on which an open end of the pin passing hole 20 side is a small diameter portion and an open end of the opening portion side is a large diameter portion is disposed between an outer peripheral surface of the pin retaining portion 3 and an inner peripheral surface of the upper housing member 22 of the housing 2 opposite to the outer peripheral surface.

An angle of the tapered surface is preferably in a range of 10 degrees to 40 degrees with respect to an axial direction of the pin P to be inserted, and more preferably in a range of 25 degrees to 35 degrees. The guide portion 7 is disposed and the angle of the tapered surface 71 is specified, by which the pin P can be clamped and retained more reliably by the pin retaining portion 3 and the small balls 31 and also the thus-clamped and retained pin P can be released more reliably and smoothly.

As for details of the pin P clamped and retained by the plurality of small balls 31 and the release thereof, it is possible to adopt a structure similar to that described in a prior art, Patent Document 10.

The thus constituted fastener 1 of the present invention is preferably constituted in such a manner that all the outer peripheral surfaces of the outer column portion 42 are in a state of being inside the housing 2 when the pin P is not inserted or substantially all the outer peripheral surfaces of the outer column portion 42 are in a state of being inside the housing 2 when the pin P is clamped and retained. According to the above constitution, where the fastener 1 is subjected to be plated, it is possible to eliminate a necessity for plating the outer column portion 42 which is not exposed at all or not substantially exposed outside and, therefore, to reduce the number of components which require plating.

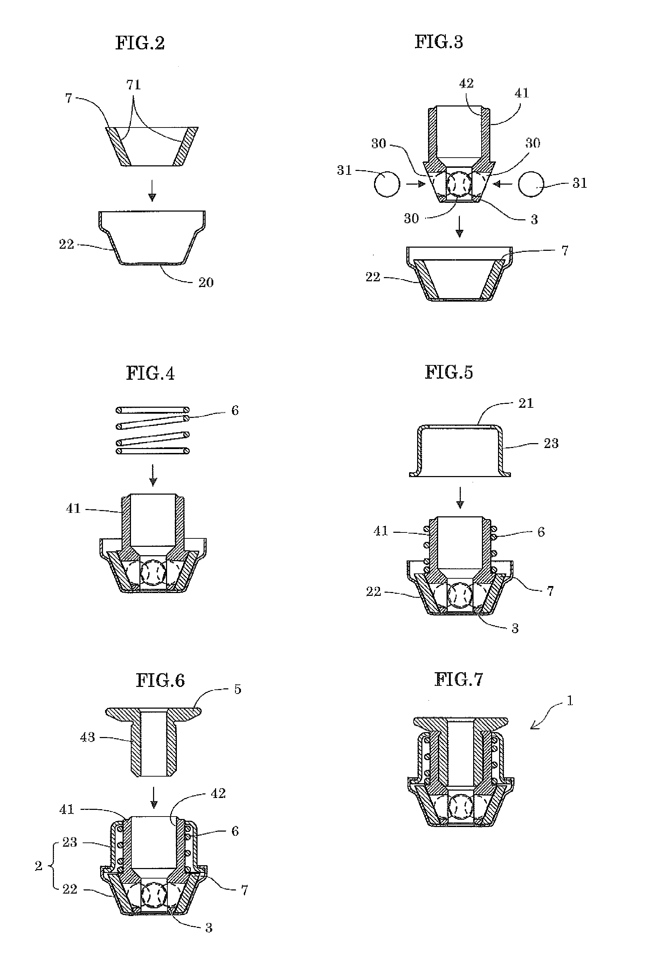

A description so far has explained examples of a specific constitution example of the fastener 1 of the present invention by referring to the embodiment.
Next, a description will be given of one example of the steps on assembling and manufacturing the above-constituted fastener 1 by referring to Figs. 2 to 7.

(1) First, the upper housing member 22 which is one constitution member of the housing 2 and has the pin passing hole 20 through which the pin P included in the ornament is inserted is placed at an assembling and manufacturing position, with the pin passing hole 20 kept below (refer to Fig. 2).

(2) The guide portion 7 which has inside the upper housing member 22 the tapered surface 71 on which an open end of the pin passing hole 20 side is a small diameter portion and an open end opposite to the small diameter portion is a large diameter portion is assembled and placed, with the small diameter portion kept below (refer to Figs. 2 and 3).

(3) After the guide portion 7 is assembled and placed, the pin retaining portion 3 is assembled and placed so as to be inside the upper housing member 22 and in contact with an inner peripheral surface of the tapered surface 71 of the guide portion 7 in a state that a plurality of small balls 31 (three balls in the present embodiment) are embraced inside the small ball retaining holes 30 of the pin retaining portion 3 (refer to Fig.3).

(4) The pin retaining portion 3 which clamps and retains the pin P inserted through the pin passing hole 20 is assembled and placed inside the upper housing member 22 in a state that the small balls 31 are embraced inside the pin retaining portions 3 (refer to Figs.3 and 4).

(5) The coil spring 6 in a state of being wound around is disposed on an outer periphery of the outer column portion 41 which is installed consecutively at the pin retaining portion 3 and formed integrally in a direction at which the pin retaining portion 3 is pulled backward (refer to Figs.4 and 5).

(6) The lower housing member 23 which is the other constitution member of the housing 2 is assembled into the upper housing member 22 of the housing 2 in which the guide portion 7, the pin retaining portion 3, the outer column portion 41 and the coil springs 6 are assembled so as to cover the outer column portion 41 and the coil springs 6 from above, in a state that the opening portion 21 formed on the lower housing member 23 is positioned above (refer to Figs.5 and 6).

(7) The upper housing member 23 is connected and fixed (fixed by crimping) to the lower housing member 23, thereby forming the housing 2 integrally (refer to Fig.5).

(8) The inner column portion 43 is inserted and fixed into the through hole 42 of the outer column portion 41 which is visible inside the opening portion 21 from the opening portion 21 of the lower housing member 23 of the housing 2 (refer to Figs. 5 and 6).

(9) The control lever 5 which is formed integrally with the inner column portion 43 by inserting and fixing the inner column portion 43 to the outer column portion 41 and releases the pin P which has been clamped and retained is installed consecutively at the pin retaining portion 3 via the outer column portion 41 and the inner column portion 43 outside the opening portion 21, thereby completing the fastener 1 (refer to Fig.7).

Regarding the fastener 1 which is constituted as described above by the assembling and manufacturing steps, a completely assembled product may be submerged into a plating solution for plating when being subjected to plating. However, in view of adverse influences on an inner mechanism resulting from submersion into the plating solution and wasteful consumption of the plating solution used in plating the constitution components which are not exposed outside, it is preferable that plating is given individually to only components which require plating, three components of four constituents which are exposed outside, that is, the upper housing member 22 and the lower housing member 23 of the housing 2, the control lever 5, and the inner column portion 43 formed integrally with the control lever 5 (an inner wall portion of the through hole 44 is given as a portion visible from outside).

In Patent Document 10 which is a prior art, the control lever is formed integrally with the outer column portion, and the outer column portion is constituted so as to be inserted and fixed outside the inner column portion. Therefore, this is a constitution in which an end of the inner column portion and an inner wall portion of the through hole thereinside are exposed inside the through hole of the outer column portion. As a result, it is necessary to give plating to the inner column portion, and components which require plating are the following four components; the upper housing member of the housing, an external case portion, the control lever and the outer column portion, and the inner column portion. In the present invention, the number of components which require plating is reduced to three components as compared with four components of the prior art. It is, thus, possible to decrease time and labor for plating by 25%.

Further, completely assembled products are not subjected to plating but components prior to assembly and manufacture are individually subjected to plating. It is, therefore, not only possible to avoid wasteful use of a plating solution but also possible to avoid occurrence of defective products resulting from submersion of the completely assembled products into the solution and consequently improve a yield ratio.

### (Description of the symbols shown in the Drawings)

- 1: fastener
- 2: housing
- 20: pin passing hole
- 21: opening portion
- 22: upper housing member
- 23: lower housing member
- 3: pin retaining portion
- 30: small ball retaining hole
- 31: small ball
- 4: column portion
- 41: outer column portion
- 42: through hole
- 43: inner column portion
- 44: through hole
- 5: control lever
- 6: coil spring
- 7: guide portion
- 71: tapered surface
- P: pin

## Claims

1. A fastener for an ornament having a pin which includes a housing that has a pin passing hole for insertion of the pin included in the ornament and an opening portion that is provided at a position directly opposite to the pin passing hole,
a pin retaining portion which is disposed inside the housing to clamp and retain a pin inserted through the pin passing hole between the respective spherical surfaces of a plurality of small balls,
a control lever which is installed consecutively at the pin retaining portion via a column portion outside the opening portion and releases the pin which has been clamped and retained outside the housing by pulling backward the pin retaining portion from the pin passing hole, and
a coil spring which is disposed on an outer periphery of the column portion inside the housing and urges the pin retaining portion and the control lever in a direction of the pin passing hole, and
the fastener for an ornament having a pin which is arranged so that the pin is clamped and retained by the small balls of the pin retaining portion in such a manner that the pin retaining portion is urged to the pin passing hole side, by which each of the small balls is pushed in a pin direction and a part of the spherical surface of each of the small balls on the pin side is brought into contact with the pin in a pressed state, and
a motion of releasing the pin which has been clamped and retained by the pin retaining portion is performed by pulling backward the pin retaining portion from the pin passing hole to release a pressing force to the pin by each of the small balls, wherein
the column portion is provided with an outer column portion of a cylindrical body which is formed integrally with the pin retaining portion in a direction at which the pin retaining portion is pulled backward and also has internally a through hole in the same direction as a direction at which the pin is inserted and
an inner column portion of a cylindrical body which is inserted and fixed on the through hole inside the outer column portion, formed integrally with the control lever in a direction at which the control lever is urged and has a through hole acting as a passage for introducing the pin inserted through the pin passing hole.

2. A fastener for an ornament having a pin according to Claim 1, wherein the housing includes an upper housing member which constitutes the pin passing hole side and a lower housing member which constitutes the opening portion side.

3. A fastener for an ornament having a pin according to Claim 1 or 2, wherein the inner column portion is inserted and fixed to the outer column portion by applying pressure.

4. A fastener for an ornament having a pin according to any one of Claims 1 to 3, wherein all the outer peripheral surfaces of the outer column portion are in a state of being inside the housing when the pin is not inserted.

5. A fastener for an ornament having a pin according to any one of Claims 1 to 4, wherein substantially all the outer peripheral surfaces of the outer column portion are in a state of being inside the housing when the pin is clamped and retained.

6. A fastener for an ornament having a pin according to any one of Claims 1 to 5, wherein a guide portion having a tapered surface in which an open end of the pin passing hole side is a small diameter portion and an open end of the opening portion side is a large diameter portion is disposed between an outer peripheral surface of the pin retaining portion and an inner peripheral surface of the housing opposite to the outer peripheral surface thereof.

7. A fastener for an ornament having a pin according to Claim 6, wherein an angle of the tapered surface is in a range of 10 degrees to 40 degrees with respect to an axial direction of the pin which is inserted.

8. A method for manufacturing the fastener for an ornament having a pin according to Claim 2, wherein
an upper housing member which is one constitution member of a housing has a pin passing hole into which a pin and included in the ornament is first placed at a position of assembly and manufacture, with the pin passing hole kept below,
a pin retaining portion which clamps and retains the pin inserted through the pin passing hole is assembled and placed inside the upper housing member in a state that a plurality of small balls are embraced inside the pin retaining portion,
a coil spring is disposed in a state of being wound around on an outer periphery of an outer column portion which is installed consecutively at the pin retaining portion and formed integrally in a direction at which the pin retaining portion is pulled backward,
the lower housing member which is the other constitution member of the housing is assembled into the upper housing member of the housing in which a guide portion, a pin retaining portion, an outer column portion and a coil spring are assembled so as to cover the outer column portion and the coil spring from above in a state that an opening portion formed on the lower housing member is kept above,
the housing is formed integrally by connecting the upper housing member to the lower housing member and fixing them, and
the inner column portion is inserted and fixed into a through hole of the outer column portion which is visible inside the opening portion from the opening portion of the lower housing member of the housing, by which a control lever which is formed integrally at the inner column portion and also releases the pin which has been clamped and retained is installed consecutively at the pin retaining portion outside the opening portion via the outer column portion and the inner column portion to complete the fastener.

9. A method for manufacturing a fastener for an ornament having a pin according to Claim 8, wherein
before the pin retaining portion is assembled and placed inside the upper housing member, a guide portion having a tapered surface in which an open end of the pin passing hole side is a small diameter portion and an open end opposite to the small diameter portion is a large diameter portion is assembled and placed inside the upper housing member, with the small diameter portion kept below, and
after the guide portion is assembled and placed, in a state that a plurality of small balls are embraced inside the pin retaining portion, the pin retaining portion is assembled and placed, while being inside the upper housing member and in contact with an inner peripheral surface of the tapered surface of the guide portion.
